# EUROPEAN PATENT APPLICATION

(11) **EP 1 323 964 A2**
(43) Date of publication of application: **02.07.2003**
(21) Application number: 03006419.0
(22) Date of filing: 30.01.1998
(51) Int. Cl.: F16K 7/16, F16K 41/12

(54) **Diaphragm valve**

(30) Priority: 03.02.1997 US 37698 P; 29.01.1998 US 72995 P
(62) Divisional of application: 98906044.7
(71) Applicant: Swagelok Company, Solon, OH 44139 (US)
(72) Inventor: Gotch, James E., Kirtland, OH 44094 (US); Kitchen, Dale J., Euclid, OH 44123 (US); Longo, Maria, South Euclid, OH 44121 (US); Rasanow, Victor, Willoughby, OH 44094 (US); Smith, Philip, Madison, OH 44057 (US)
(74) Representative: Neill, Alastair William

(57) **Abstract**

The present invention provides a valve seat arrangement for a diaphragm valve of the type having a first body (10) with fluid inlet and outlet openings (16,18) therein and a second body (26) axially coupled to said first body with a contoured diaphragm (28) seal clamped therebetween for controlling flow between said inlet and outlet passages, the valve seat arrangement comprising: a first collar (44) that surrounds one of said fluid openings and that extends axially toward said diaphragm; a second collar (46) that is radially spaced outward from said first collar to form a recess (42) axially therebetween; said second collar (46) extending axially toward said diaphragm a distance substantially greater than said first collar to form a void region outside the recess (42) ; a valve seat (40) disposed in said recess; said seat extending axially beyond said second collar (46) and being retained in said recess (42) by said first collar (44); said seat having an upper surface (40a) that engages with and forms a seal with a portion of said diaphragm to close said one opening; said upper surface generally conforming to said diaphragm contour when engaged therewith.

## Description

This application claims the benefit of U.S. provisional application nos. 60/037,698 on February 3, 1997 and 60/(unassigned) filed on January 29, 1998 for DIAPHRAGM VALVE (Docket No. 22188-04019 with Express Mail Label No. EM17820749US), the entire disclosures of which are fully incorporated herein by reference.

### Technical Field of the Invention

The subject invention is directed to a high flow diaphragm valve of the general type shown in U.S. Patent Nos. 4,671,490; 4,732,363; and 4,750,709. More particularly, the invention is directed to a diaphragm valve having an improved valve seat arrangement and an improved body seal using a single clamp and corner arrangement.

### Background of the Invention

Diaphragm valves are generally known and include a body seal arrangement and a valve seat arrangement. The body seal typically is achieved at or near the outer peripheral area of the diaphragm by clamping and compressing the diaphragm between facing surfaces of the valve body. Imperfections in the body surfaces and diaphragm surface, however, can require very high compression of the diaphragm to achieve a satisfactory seal. Harder materials for the diaphragm exacerbate the body seal problem at the clamping surfaces.

A valve seat is used to seal off an inlet and outlet passageway by engaging with the diaphragm. Prior designs tend to have large surface areas of the seat exposed to the fluid, thus providing possible leak paths and contamination. Valve seat surfaces can be pre-formed with specific contours to improve sealing, but such steps tend to be time consuming and thus more expensive.

Accordingly, it is a general objective of the present invention to provide a valve seat arrangement giving a diaphragm-type valve that has improved body seal and valve seat arrangements and that can be manufactured at competitive costs and performance, with higher flow rates achieved using similar overall device dimensions.

The invention relates to a valve seat arrangement suitable for use in a flow control device such as a diaphragm valve and to a flow control device such as a diaphragm valve comprising said valve seat arrangement. The diaphragm valve may include a first body and a second body; means for clamping the bodies together in an axially aligned relationship; a diaphragm seal that is disposed axially between the first and second bodies to form a seal there between; each of the first and second bodies having a generally flat surface portion near its respective outer periphery; at least one of the generally flat surfaces being adjacent an outer corner thereof; the diaphragm being singularly clamped between the generally flat portions; the diaphragm having an outer peripheral portion adjacent the generally flat surfaces and that bends over the seal at the corner.

In accordance with the invention there is provided a valve seat arrangement for a diaphragm valve of the type having a first body with fluid inlet and outlet openings therein and a second body axially coupled to said first body with a contoured diaphragm seal clamped there between for controlling flow between said inlet and outlet passages, the valve seat arrangement including a first collar that surrounds one of said fluid openings and that extends axially toward the diaphragm; a second collar that is radially spaced outward from the first collar to form a recess there between; the second collar extending axially toward the diaphragm a distance greater than the first collar; a valve seat disposed in the recess; the seat extending axially beyond the second collar and being retained in the recess by the first collar; the seat having an upper surface that engages with and forms a seal with a portion of the diaphragm to close the one opening; the upper surface generally conforming to the diaphragm contour when engaged therewith.

A valve seat arrangement according to the invention for a diaphragm valve of the type having a first body with fluid inlet and outlet openings therein and a second body axially coupled to said first body with a contoured diaphragm seal clamped there between for controlling flow between said inlet and outlet passages, suitably comprises: a first collar that surrounds one of said fluid openings and that extends axially toward said diaphragm;'a second collar that is radially spaced outward from said first collar to form a recess there between; said second collar extending axially toward said diaphragm a distance greater than said first collar; a valve seat disposed in said recess; said seat extending axially beyond said second collar and being retained in said recess by said first collar; said seat having an upper surface that engages with and forms a seal with a portion of said diaphragm to close said one opening; said upper surface generally conforming to said diaphragm contour when engaged therewith.

The valve seat arrangement may be arranged such that said second collar extends axially a distance substantially greater than said first collar.

The valve seat arrangement may be arranged such that said first collar has an axial length that is less than about three-fourths the axial length of said second collar.

The valve seat arrangement may be arranged such that said first collar may be staked radially outward to crimp a lower portion of said seat; said crimp displacing seat material to form a contour to said seat upper surface.

The valve seat arrangement may be arranged such that said contour is a concave surface that conforms to said diaphragm portion when engaged therewith.

The valve seat arrangement may be arranged such that said seat may be initially formed with a flat upper surface that lies substantially transverse its longitudinal axis; said surface being deformed into a concave shape when said seat is retained in said recess by said first collar.

The valve seat arrangement may be arranged such that said second collar has an axial length that is substantially greater than said first collar axial length; said second collar having an upper surface that is generally contoured to said seat upper surface when engaged with said diaphragm.

The valve seat arrangement may be arranged such that said seat upper surface extends axially slightly beyond said second collar upper surface; said second collar including an interior wall that supports said seat when said diaphragm is sealingly engaged therewith.

The valve seat arrangement may be arranged such that said second collar upper surface engages said diaphragm to reduce damage due to over-torque or excessive force.

The valve seat arrangement may be arranged such that said seat upper surface is a generally flat concave surface to provide a substantial radially extending surface area to seal said diaphragm.

The valve seat arrangement may be arranged such that said seat upper surface extends axially slightly beyond said second collar.

A flow control device having a valve seat arrangement according to the invention suitably comprises: a first body and a second body; means for clamping said bodies together in an axially aligned relationship; a diaphragm seal that is disposed axially between said first and second bodies to form a seal there between; each of said first and second bodies having a generally flat surface portion near its respective outer periphery; at least one of said generally flat surfaces being adjacent an outer corner thereof; said diaphragm being singularly clamped between said generally flat portions; said diaphragm having an outer peripheral portion adjacent said generally flat surfaces and that bends over and seals at said corner.

The device may be arranged such that a primary seal is formed between said diaphragm and said corner and a secondary seal is formed between said diaphragm and said generally flat surface portions.

The device may be arranged such that said diaphragm is bent about a single corner.

The device may be arranged such that said corner is formed between said generally flat surface and a second surface; said generally flat surface and said second surface being part of an annular collar that encircles an inlet passage and an outlet passage of the flow control device.

The device may be arranged such that said second surface forms an included angle with said generally flat surface, said included angle being less than 180°.

The device may be arranged such that said corner is initially formed as a sharp edge and wherein said corner yields when said diaphragm is compressed against said corner.

The device may be arranged such that said corner yields to a radius.

The device may be arranged such that said diaphragm comprises a material that is substantially harder than said body material.

The device may be arranged such that said body comprises low carbon stainless steel and a bonnet of harder material than said body.

The device may be arranged such that said outer corner is formed in said first body, said second body having a second corner formed adjacent its said generally flat surface; said second corner initially engaging said diaphragm outer peripheral portion before said diaphragm is clamped between said generally flat surfaces as said second body is made up with said first body.

The device may be arranged such that said corner acts as a fulcrum with said diaphragm being sealingly bent around said corner when said first and second bodies are made up.

The device may be arranged such that said clamped portion of said diaphragm reduces stress at said corner seal during cyclic operation of said diaphragm seal.

The device may be arranged such that said second body extends outward radially from said second corner along a surface that axially extends toward said first body to form an edge that initially engages said diaphragm to begin bending said diaphragm about said corner during make-up of said first and second bodies, said second corner engaging said diaphragm after said initial engagement to further and sharply bend said diaphragm about said corner before said diaphragm is clamped between said generally flat surfaces.

The device may be arranged such that said initial engagement applies tension to said diaphragm.

The device may be arranged such that said diaphragm is annular and generally convex with a circumferential generally flat portion adjacent said diaphragm outer edge.

These and other aspects and advantages of the present invention will be readily understood and appreciated by those skilled in the art from the following detailed description of the preferred embodiments with the best mode contemplated for practicing the invention in view of the accompanying drawings.

### Brief Description of the Drawings

The valves of the subject application can best be understood by reference to the accompanying drawings wherein:
Figure 1 is a vertical cross-sectional view through a hand operated version of the diaphragm valve;
Figure 2 is an exploded isometric view of the operating portion of the valve of Figure 1;
Figure 3 is a partial section view taken on line 3-3 of Figure 1 but showing the indicator dial used with the manual operating system of Figure 2;
Figure 4A is an elevational view of the body element used in all versions of the subject valve;
Figure 4B is a view taken on line 4B-4B of Figure 4A;
Figure 4C is a greatly enlarged view of the circled area of Figure 4B;
Figures 5A and 5B are views showing the circled area of Figure 1 immediately before the bonnet is clamped into engagement with the diaphragm and immediately after completion of the clamping;
Figures 6A, 6B, and 6C show the circled seat area of Figure 1 during the sequence of forming and staking the resilient seat element into position in the body;
Figure 7 is a vertical cross section through an air-actuated version of the valve (this version is a normally closed air actuator); and
Figure 8 is a vertical cross-sectional view through a normally open air actuator which can be used on the valve body of Figure 1 or Figure 7.

### Detailed Description of the Invention

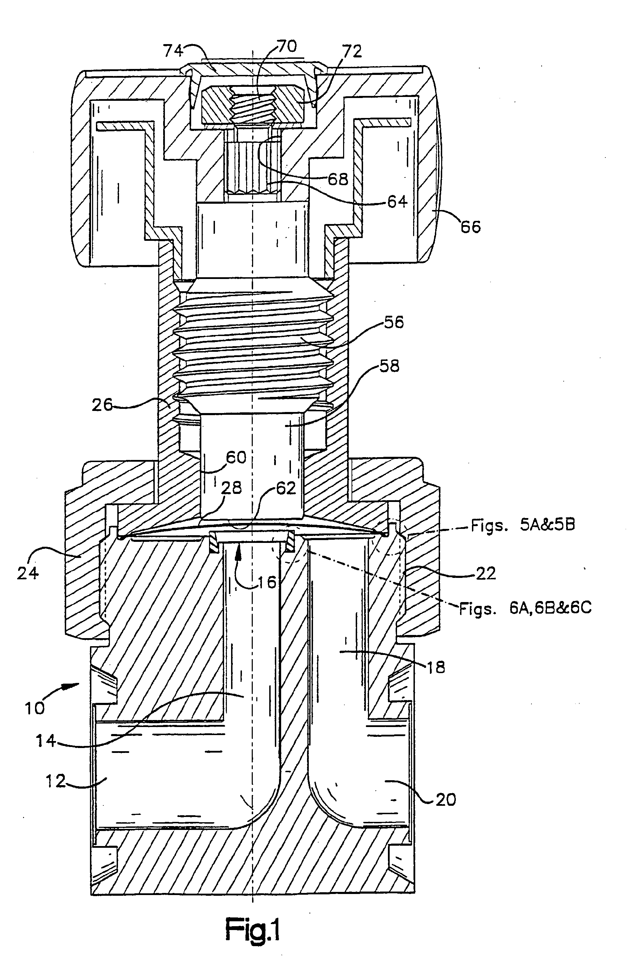

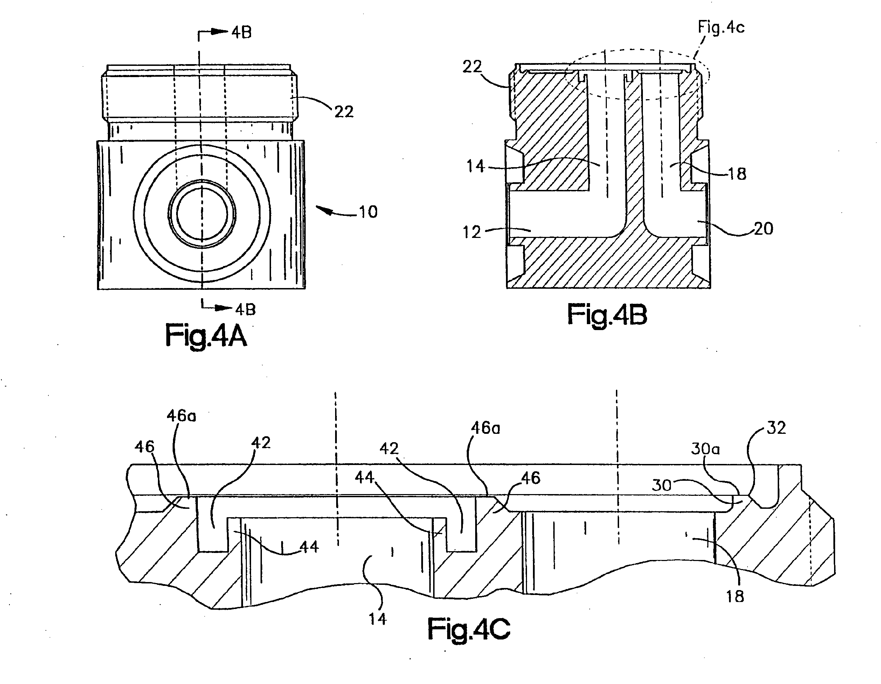

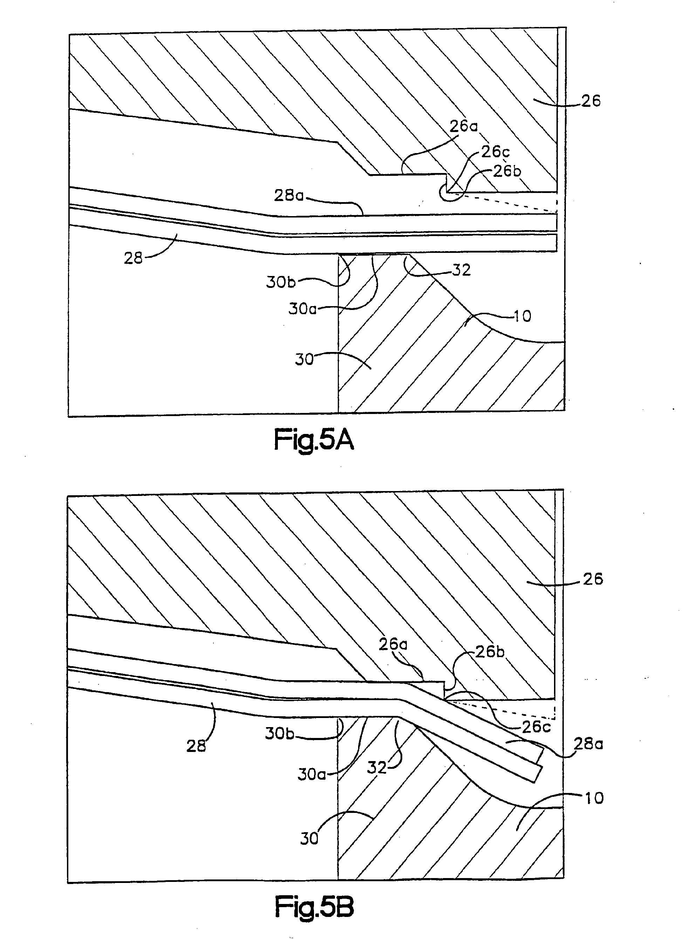

As mentioned herein earlier, the valves of the subject invention all use a common body design and construction which can best be understood by reference to Figures 1, 4A, 4B, 4C, 5A, 5B, 6A, 6B, and 6C. As illustrated therein, the body 10 is machined from a suitable metal such as stainless steel and comprises an inlet passage 12 which connects with a vertically extending flow passage 14 leading to a valved outlet opening 16 at the upper end of body 10. An exit or discharge passage 18 extends downwardly parallel to the passage 14 and connects an outlet 20. The upper end of the body 10 is circumferentially threaded at 22 for threaded receipt of a bonnet nut member 24. Positioned over the upper end of the body 10 and clamped thereto by a bonnet member 26 is a multiple layer metal diaphragm 28. The general construction and arrangement of the diaphragm 28 can be, for example, as described in the above-mentioned U.S. patents which are incorporated herein by reference. Of importance is the manner in which the peripheral edge of the diaphragm assembly 28 are clamped and sealed relative to the body 10. In this regard, attention is directed to Figures 4A - 4C, 5A, and 5B. As shown in FIGURE 4C, a raised flange **30** extends circumferentially about the upper end of the body **10** and encircles both the outlet from passage **14** and the inlet to passage 18. The outer wall of the collar **30** is preferably inclined as shown so that the included outer corner angle **32** is in the range of about 120° to 145°; this range is exemplary, however, with the included angle being selected at any suitable value based on the overall apparatus design and configuration.

FIGURES 5A and 5B are greatly enlarged showings of the relationship between the flange or collar **30**, the diaphragm assembly **28**, and the lower clamping edge portion of the bonnet **26.** The diaphragm **28** is shown in position on the top planar surface **30a** of the collar **30**. Preferably, the diaphragm is provided with a convex center section (see FIGURE 1) and a generally planar, radially extending peripheral edge section **28a** as illustrated in FIGURE 5A. The bonnet **26** itself has a contoured lower peripheral surface which includes a flat **26a** that is surrounded by a cylindrical wall **26b** that terminates in a corner **26c**. When the bonnet is driven into clamping engagement as shown in FIGURE 5B, the flat **26a** clamps the top surface of the diaphragm assembly **28** as shown. The corner **26c**, however, deflects and bends the outer peripheral portion of the diaphragm downwardly creating a high sealing pressure over corner **32** of collar **30**. The final relationship is shown in FIGURE 5B.

The clamping sequence is as follows. When the bonnet is driven into initial clamping engagement as in FIGURE 5A, the corner **26c** deflects and bends the outer peripheral portion 28a of the diaphragm downward and over the corner 32 of the collar 30 (see FIGURE 5A). The flat 26a then begins clamping the top surface of the diaphragm 28 against the top planar surface 30a of the collar 30 ((preferably but not necessarily the flat 26a is generally parallel to the flat 30a when the bonnet and body are clamped together), while the corner 26c continues acting on the diaphragm peripheral portion 28a thus bending and crimping the diaphragm 28 around the corner 32. The force applied during this make-up procedure is sufficient to deform or yield the diaphragm 28 and the corner 32 to create a primary body seal there between. The deformation or yielding of the corner 32 and the diaphragm to form the primary seal is controlled by proper sizing of the corner 26c diameter and hardness, the corner 32 diameter, the length of the cylindrical wall 26b and the diaphragm 28 thickness. It is preferred but again not required that the deformation or yielding occur primarily at the corner 32 and the diaphragm in order to produce a good primary seal; therefore the bonnet 26 can be made of a harder material than the collar 30. A suitable material is 17-4PH (precipitation hardened) stainless steel although this is but one example of stainless steel and other materials that are well known to those skilled in the art. The primary seal corner 32 deformation is limited when the diaphragm 28 is clamped between the flat planar surfaces 26a and 30a, which clamping produces a secondary seal between the bottom surface of the diaphragm 28 and the top planar surface 30a of the collar 30. This secondary seal and clamping helps reduce or eliminate entrapment areas. The radial inner edge 30b of the collar 30, and the clamping force applied to the diaphragm 28 radially inward from the corner 32 primary seal area also operate to reduce stress applied to the primary seal under cyclic operation of the diaphragm 28 by acting as pivot points for the diaphragm 28 as the diaphragm cycles up and down. These pivot points are radially spaced inward of the primary seal and thereby reduce stresses applied to the primary seal area during such diaphragm movement. The described body seal design significantly reduces the interior space required to sealingly clamp the diaphragm 28 within the valve, thus freeing more internal space to increase fluid flow. Still further, during the initial engagement when the corner 26c engages the diaphragm flat outer peripheral portion 28a, the diaphragm 28 is placed in tension prior to being clamped between the flats 26a, 30a. This tension increases the radius of the diaphragm dome and the transition radius to the peripheral flat portion 28a. The tension thus reduces the cyclic stress caused by "snap-through" action of the diaphragm. Both of these effects improve fatigue life of the diaphragm 28.

The portion of the bonnet **26** radially outward of corner **26c** can vary as shown by the dotted line. Additionally, the included angle of the corner **26c** can vary from less than 90° to somewhat in excess of 100° or more. The angle should be selected, however, so as to control the necessary deflection of the diaphragm over the corner **32** and assure a sealing contact as required.

Referring again to FIGURE 1, it will be seen that the clamping forces necessary to drive the peripheral edge of the bonnet into sealing engagement with the diaphragm assembly **28** and produce the necessary sealing and clamping about the peripheral edge of the diaphragm is generated by the bonnet nut **24** being threadedly engaged with the body and suitably driven downwardly. As previously mentioned, the diaphragm 28 preferably has a preformed convex shape as illustrated in FIGURE 1 so that in its normal, non-deflected position, it extends above the outlet **16** from passage **14**.

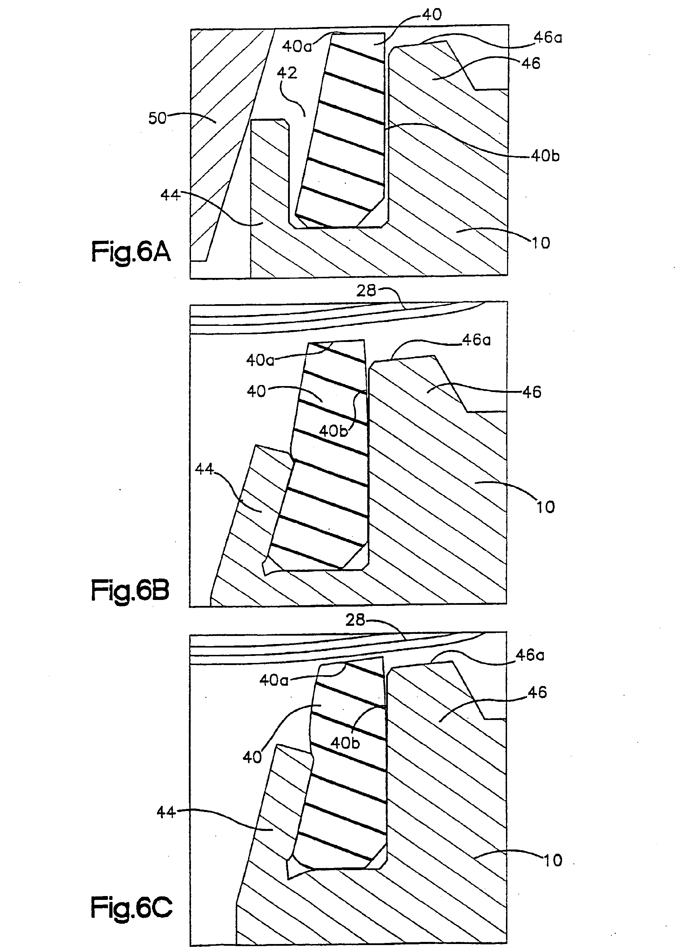

FIGURES 6A - 6C illustrate the seat and the manner it relates to the diaphragm assembly **28**. In the subject embodiment, the seat is defined by a resilient seat ring member **40** that is positioned in a recess **42** formed circumferentially about the upper end of the passage **14**. Referring to FIGURE 4C, this recess **42** is formed to extend axially in from the top surface of body **10** and provide an axially extending flange or collar **44**. Radially outward of the recess **42** is a raised collar **46** having the contour and general configuration shown. Referring again more particularly to FIGURES 6A - 6C, the resilient seat ring **40** has the normal non-deformed configuration shown in FIGURE 6A and is formed from any suitable resilient material such as PCTFE (polychlorotrifluoroethylene) or any of the materials suggested in the above-identified U.S. patents depending upon the operating environment and conditions.

The assembly of the seat into the recess **42** is carried out in the sequence suggested by FIGURES 6A - 6C. FIGURE 6A shows the seat element positioned in the recess **42** subsequent to deformation of the inner collar or flange **44**. With the seat element **40** positioned in the recess, a staking tool is brought into position as generally illustrated by item **50**. The staking tool item **50** is then driven downwardly to deflect radially outward the collar or flange **44** to a position as shown in FIGURE 6B wherein the seat element is mechanically locked, tightly gripped and sealed between the collar 44 and the surrounding body sections including the collar **46**. This staking process causes the upper surface 40a of the seat 40 to become slightly concave to more closely match or conform with the contour of the diaphragm 28 lower surface (as viewed in FIGURE 6B) during shutoff. When the body and the seat assembly are subsequently assembled into position in an operative valve, the diaphragms can be deflected downwardly during the first cycle and they generally follow the contour of the lower end of the operating stem and/or operating button in a manner subsequently to be described. That is, the generally convex configuration of the diaphragm assembly becomes concave and engages in sealing fashion with the upper concave end surface 40a of the seat ring **40**. The diaphragm 40 further engages the upper surface 46a to reduce diaphragm and seat damage due to over-torque or excessive force during shut-off. Over repeated cycling the seat upper surface 40a will tend to further conform to the diaphragm contour.

The outer perimeter 40b of the seat 40 is nearly entirely supported by the collar 46 to reduce or limit seat strain during high shut-off forces. Also, the radially inner collar 44 is substantially shorter in its axial length than the axial length of the outer collar 46. For example, the inner collar 44 axial length may be between about 25% and about 75% of the axial length of the outer collar 46. This arrangement provides space for the upper portion of the seat 40 to deform (such as, for example, in the nature of a bulge as represented in FIGURE 6c) inward during shut-off and to increase resiliency of the upper portion of the seat 40 to elastically deform under shut-off forces typically incurred in the various embodiments herein, thus permitting the upper surface 40a of the seat 40 to conform to and seal against the diaphragm 28.

The above-described seat 40 configuration and assembly staking process allow a more economical finishing of the seat 40 sealing surface 40a. The seat seal surface 40a can be initially formed as a flat horizontal surface to simplify the finishing step thereof. If the seat surface 40a were formed concave, it would be significantly more costly to finish the surface. The concave contour of the seat surface 40a that is produced by the staking operation also increases the contact surface area between the seat 40 and the diaphragm. This increased sealing area including the increased radial distance of the contact area improves seat seal performance and reduces permeation leakage across the sealing area.

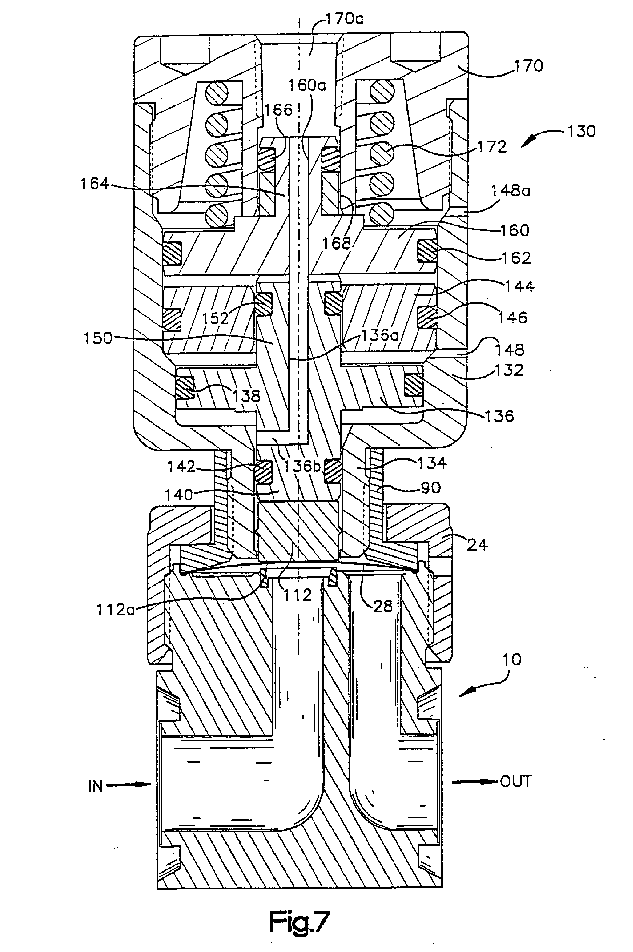

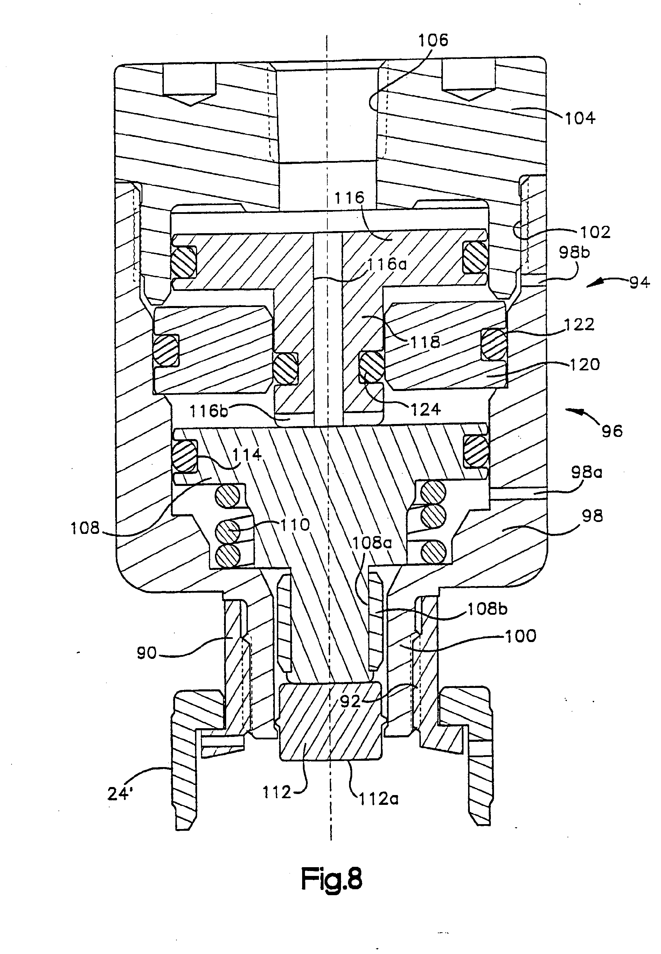

The basic structure thus far described is used with a hand operator as well as a normally closed and a normally opened manual operator or air actuator. Specifically, FIGURES 1, 2, and 3 illustrates the manual operator whereas FIGURES 7 and 8 illustrate the two forms of air actuators or operators. Referring in particular to FIGURES 1 - 3, the bonnet **26** of the hand or manual operator is provided with internal threads which receive an externally threaded operator element **56** having a cylindrical lower end **58** that passes through a reduced diameter opening **60** at the lower end of the bonnet **26**. The lower end of the operator is slightly convex as shown at **62** and directly engages the top surface of the diaphragm assembly **28**. The lower surface of the operator 62 closely matches the upper surface 46a of the outer collar 46 and biases the seat 40 sealing forces in a radial outward direction where the seat 40 is supported by the raised outer collar 46. Preferably, a suitable lubricant, either solid or liquid, is positioned between the upper surface of the diaphragm assembly **28** and the operating convex surface **62** of the operator 58.

At its upper end, the operating element **56** is provided with a reduced diameter keyed end portion **64** that receives the manual operating handle **66**. It will be noted that the handle **66** includes a central opening **68** that is also keyed to correspond to the end portion **64** of operating member **56**. The outermost end of the operating element is threaded as shown at **70** and adapted to receive a clamp nut **72** that holds the handle **66** in position. A suitable end cover **74** is snapped in position in the handle to cover nut **72**.

Movement of the handle is limited to a three-quarter turn arrangement between full open and full closed. This is accomplished by a stop element **76** molded within the handle and arranged to engage opposite sides of a rigid stop element **78** extending upwardly from the top end of bonnet **26**. Movement of the handle is, of course, limited by engagement between the stop **76** and element **78** at opposite ends of rotation.

Located between the bonnet **26** and the handle **66** is a base element **80** which includes a central cylindrical portion and an upper radially extending flange **82**. At its lower end, there is a reduced diameter sleeve portion **84** which extends downwardly within the upper end of bonnet **26** as best seen in FIGURE 1. A suitable opening **88** is formed through the base member **80** to allow the stop **78** to extend upwardly therethrough for engagement by stop member **76** of the handle **66**.

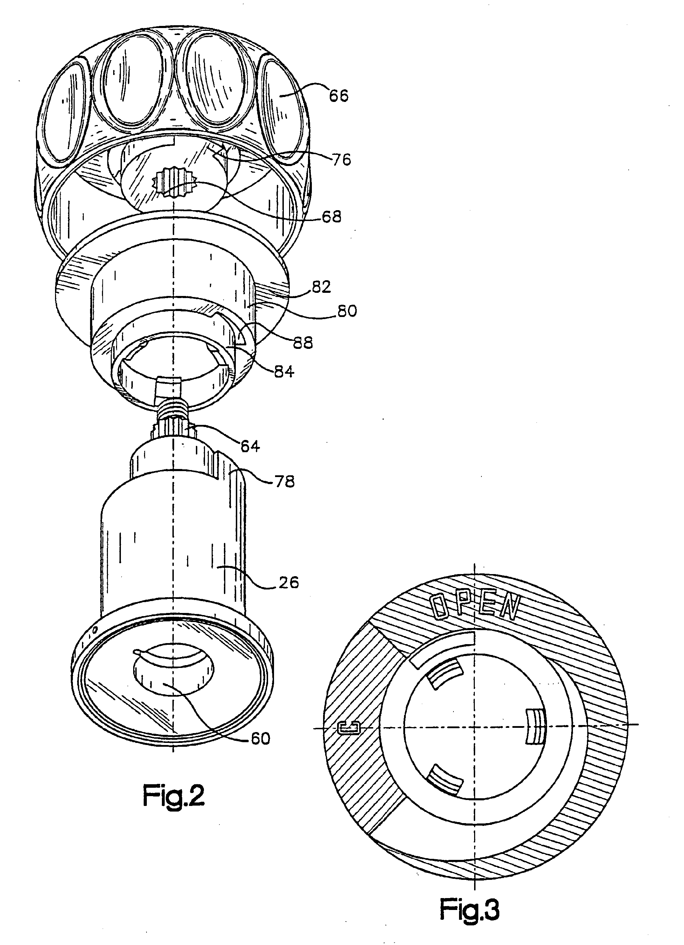

The top surface of the flange **82** of the base **80** is provided with indicia of the type shown in FIGURE 3. Similarly, the handle is provided with an opening through its upper surface so that the indicia on flange **82** is visible therethrough. Preferably, the opening through the handle is a 90° slot which generally corresponds to the portion indicated with the letter C in the indicia markings. Thus, when the handle is in the full closed position, the red C area of the indicia shows through the opening indicating to an observer that the valve is in a closed position. However, as the valve handle is moved counterclockwise, the indicia is shown to change from a white/green combination to a full green open position.

In addition to the manual operated arrangement, it is possible to operate the valve with other types of actuators such as the normally open actuator shown in FIGURE 8. This actuator is arranged so as to thread directly to the upper end of the body 10 and includes a bonnet nut **24'** which clamps a shorter and modified bonnet element **90** into position to clamp the diaphragm in sealing engagement with the body **10**. The interior of the bonnet **90** is threaded as shown at **92**. The air actuator **94** has a housing **96** including a lower housing portion **98** that has a reduced diameter threaded end **100** which is threaded into the bonnet nut **90** as shown. The housing portion **98** defines a multiple diameter internal chamber which is threaded at its upper end as shown at **102** and receives a cap **104**. The cap **104** is provided with a threaded inlet port **106** for connection to a suitable air supply line (not shown). Positioned within the chambers defined by housing component **98** is a first piston member 108 which is mounted for vertical reciprocation and is continually biased in an upward valve open direction by a relatively heavy coil spring **110**. The lower end or reduced diameter portion **108a** of piston **108** receives a wear resistant bushing 108b to guide the lower piston 108 within the reduced diameter housing portion 100. The lower end of the piston 108 bears against a drive button member **112** that is guided and retained within the portion **100** and acts directly against a top surface of the diaphragm **28** of the associated valve body. Preferably, the button **112** is formed from a suitable plastic material having lubricating qualities. The lower end surface 112a of the button 112 is slightly convex to closely match the top concave surface 40a of the seat 40. The piston **108** is sealed by a suitable 0-ring **114** located about its upper end. Normally, the piston is biased upwardly as shown to a valve opening position. The area below the piston 108 is vented to atmosphere through an opening 98a. A second piston member is carried above the first piston **108**. The second piston **116** has a reduced diameter portion **118** that extends through an intermediate wall defining piston-like member **120** located generally centrally of the housing **94**. The intermediate wall **120** is sealed by an 0-ring **122** and the reduced diameter portion **118** is also sealed by an 0-ring **124** where it passes through the wall **120**. The area between the upper piston 116 and the intermediate piston 120 is vented to atmosphere through an opening 98b.

Air supplied through inlet port **106** acts against the top surface of the piston **116** and is also conducted through the center opening **116a** and the radial grooves **116b** so as to fill the space between the lower surface of the wall **120** and the top surface of piston **108**. Thus, this allows the downward force of both the area of the top piston **116** and the top of piston **108** to act against the force of spring **110** and move the valve to a closed position. Thus, the two piston arrangement provides a great force multiplication.

In addition to the normally open air actuator as shown in FIGURE 8, a normally closed air actuator is also proposed and illustrated in FIGURE 7. The FIGURE 7 showing shows the assembly directly connected to the valve body **10**. The normally closed actuator assembly **130** is connected to the valve body 10 by the previously-mentioned bonnet nut **24'** and the bonnet **90.** Here, again, a button element **112** with a lower surface **120** slightly convex to closely match the top concave surface 40a of the seat 40, is used to act directly against the diaphragm assembly **28**. The actuator assembly **130** includes a main housing member **132** having a lower end **134** of reduced diameter and threadedly received in the bonnet **90**. The housing **132** has a stepped diameter interior as shown and carries a first piston member **136** at its lower end. The piston **136** is mounted for vertical reciprocation and is sealed by a central 0-ring **138**. At its lower end, reduced diameter portion **140**, it is also provided with an 0-ring **142** and is sealed within the reduced diameter opening within the end portion **134**. Centrally of the housing member **132** there is a wall defining disk-like member **144** which is sealed about its outer periphery by an 0-ring **146**. The area under the wall **144** is vented to atmosphere through an opening **148**. The reduced diameter upper end portion **150** of the piston **136** is sealingly and sliding received through the central opening in the wall member **144** and sealed during movement therethrough by an 0-ring **152**.

Positioned above the wall **144** for acting against the upper end of piston portion **150** is a second actuating piston **160** which is mounted for vertical reciprocation in the upper end of the housing member **132** and sealed about its periphery by an 0-ring **162**. The reduced diameter upper end portion **164** of the upper piston **160** is provided with an O-ring **166** and is slidably received within a cylindrical bore **168** carried in an end cap member **170**. The area above the upper piston 160 is vented to atmosphere through an opening 148a. The end cap member is threadedly and sealing received on the upper end of the housing member **132** and carries a relatively heavy coil spring **172** which acts downwardly against the piston **160** which in turn acts against the upper end **150** of piston **136**. Thus, the valve is normally biased to a closed position. The showing of FIGURE 7 shows the valve in its open position however. To achieve this open position, air is supplied through the port **170a** at the upper end of cap **170**. It then flows through the central opening **160a** to a position under the piston 160 where it exerts an upper force tending to act against the bias of spring 172. Additionally, air is supplied through the central opening 136a to a position where it flows radially through a passage 136b to the space under piston 136. This biases piston 136 upwardly with the upper end portion 150 bearing against the underside of piston 160. This produces a multiplication of force acting in an upward direction allowing the diaphragm assembly 28 to move to the open position shown.

While the invention has been shown and described with respect to specific embodiments thereof, this is for the purpose of illustration rather than limitation, and other variations and modifications of the specific embodiments herein shown and described will be apparent to those skilled in the art within the intended spirit and scope of the invention as set forth in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A valve seat arrangement for a diaphragm valve of the type having a first body (10) with fluid inlet and outlet openings (16,18) therein and a second body (26) axially coupled to said first body with a contoured diaphragm (28) seal clamped therebetween for controlling flow between said inlet and outlet passages, the valve seat arrangement comprising: a first collar (44) that surrounds one of said fluid openings and that extends axially toward said diaphragm; a second collar (46) that is radially spaced outward from said first collar to form a recess (42) axially therebetween; said second collar (46) extending axially toward said diaphragm a distance substantially greater than said first collar to form a void region outside the recess (42); a valve seat (40) disposed in said recess; said seat extending axially beyond said second collar (46) and being retained in said recess (42) by said first collar (44); said seat having an upper surface (40a) that engages with and forms a seal with a portion of said diaphragm to close said one opening; said upper surface generally conforming to said diaphragm contour when engaged therewith.

2. The valve seat arrangement of claim 1, wherein said first collar has an axial length that is less than about three-fourths the axial length of said second collar.

3. The valve seat arrangement of claim 1 or 2, wherein said first collar is staked radially outward to crimp a lower portion of said seat; said crimp displacing seat material to form a contour to said seat upper surface.

4. The valve seat arrangement of claim 3, wherein said contour is a concave surface that conforms to said diaphragm portion when engaged therewith.

5. The valve seat arrangement of claim 3 or 4, wherein said seat is initially formed with a flat upper surface that lies substantially transverse its longitudinal axis; said surface being deformed into a concave shape when said seat is retained in said recess by said first collar.

6. The valve seat arrangement of any preceding claim, wherein said second collar has an axial length that is substantially greater than said first collar axial length; said second collar having an upper surface that is generally contoured to said seat upper surface when engaged with said diaphragm.

7. The valve seat arrangement of claim 6, wherein said seat upper surface extends axially slightly beyond said second collar upper surface; said second collar including an interior wall that supports said seat when said diaphragm is sealingly engaged therewith.

8. The valve seat arrangement of claim 7, wherein said second collar upper surface engages said diaphragm to reduce damage due to over-torque or excessive force.

9. The valve seat arrangement of any preceding claim, wherein said seat upper surface is a generally flat concave surface to provide a substantial radially extending surface area to seal said diaphragm.

10. The valve seat arrangement of claim 9, wherein said seat upper surface extends axially slightly beyond said second collar.

11. A fluid flow control device comprising a diaphragm valve having; a first body (26) and a second body (10); means for clamping (22,24) said first and second bodies together in an axially aligned relationship; a diaphragm (28) that is disposed axially between said first and second bodies to form a fluid seal there between; said diaphragm having a fluid flow side and a non-fluid flow side; a valve seat arrangement according to any preceding claim; and wherein each of said first and second bodies has a generally flat surface portion (30a, 26a) near its respective outer periphery; at least one of said generally flat surfaces (30a) being adjacent an outer corner (32) thereof; said diaphragm being singularly clamped between said generally flat portions; said diaphragm having an outer peripheral portion (28a) adjacent said generally flat surfaces and that bends over and seals at said corner (32) radially outward from said singular clamp on said fluid flow side of the diaphragm.
